# EUROPEAN PATENT APPLICATION

(11) **EP 3 832 545 A1**
(43) Date of publication of application: **09.06.2021**
(21) Application number: 19383081.7
(22) Date of filing: 04.12.2019
(51) Int. Cl.: G06K 19/07, G06K 19/077

(54) **WEARABLE OR PORTABLE DEVICE FOR ELECTRONIC IDENTIFICATION**

(71) Applicant: Mobileknowledge, 08018 Barcelona (ES)
(72) Inventor: Ozenne, Patrick, 38630 LES AVENIERES (FR); Recolons Marina, Luis, 08006 BARCELONA (ES); Llabrés Llambías, Cristina, 07701 MAHÓN (ES)
(74) Representative: ZBM Patents - Zea, Barlocci & Markvardsen

(57) **Abstract**

A wearable or portable device for electronic identification is presented, comprising one or more charms, the charm further comprising a passive RFID IC embedded within it configured to be identified by an identifying system. The wearable device may be added to an ornamental or wearable element the user may already be wearing, reducing overall space and weight. It may also be embedded in an accessory already worn or carried by the user with no noticeable extra weight on it.

## Description

### Field of the invention

The present disclosure relates to a device in the field of wearable technology, i.e. electronic devices that can be worn as accessories, embedded in clothing, implanted in the user's body, or even tattooed on the skin, the devices having practical use beyond their aesthetic appearance.

### BACKGROUND

Contactless identification or payment is widespread nowadays, wherein necklaces, bracelets or other devices worn or held by a user, with identification means such as RFID chips, are used to identify the user when, for example, the user may be entering a specific premises (such as, for example, a car park) or to pay, by using a contactless payment system.

### SUMMARY

According to a first aspect of the present disclosure, a wearable or portable device for electronic identification is presented, comprising one or more charms, the charm further comprising a passive Radio Frequency Identification Integrated Chip (RFID IC from now on) embedded in it and configured to be identified by an identifying system, wherein the charm comprises an opening, the device further comprising:
- An elongated conductive body comprising two points with a non-conductive spacing between them;
- A dielectric portion arranged in the spacing between the two points of the elongated conductive body;
wherein the opening of the charm is configured to be mounted movable around the body, and wherein the dielectric portion is configured to cooperate with the charm such that, in an assembled position of the charm on the dielectric portion, the passive RFID IC electrically connects the two points of the conductive body, such that at least part of the conductive body forms an antenna for the RFID IC.

A charm, according to the present disclosure, may be considered a small ornament or trinket which may be attached to an elongated conductive body of the wearable device, either by means of the opening being mounted and movable around the body, or by means of an intermediate piece (for example a ring) being attached to the opening and the body. A charm may also take the form of, for example, a part of the wearable device which may have an ornamental function, attached to the body of the wearable device through the opening or through further intermediate pieces linking the opening to the body itself.

The dielectric portion may be made of a an insulating material such as, for example, a plastic material, or any other insulating material, in order to keep the non-conductive spacing of the body completely insulated when the charm is in a non-assembled position. The dielectric portion may also be a space gap, wherein the dielectric portion itself is air, thus insulating two ends of the conductive body and forming a non-conductive spacing on the body.

A way to electronically identify the user is achieved by means of the present disclosure, wherein the wearable device may be added to an ornamental or wearable element the user may already be wearing, thus making the use of the wearable device more comfortable as well as practical. It may also be embedded in an accessory worn or carried by the user with no noticeable extra weight on it, since an already existing part of the accessory may be used to activate the RFID Integrated Circuit (RFID IC from now on) and perform a further identification. Also, no external extra device is needed to identify the user.

Furthermore, by using a passive technology such as an RFID IC, embedded in a charm, there is no need to power microprocessors or similar computing devices (for example, using batteries). Furthermore, it enables to use the wearable device in an accessory with no noticeable heat increase of the accessory.

In an assembling position, the RFID IC may be connected to the conductive body in different ways: for example, making contact between two connectors of the RFID IC with the corresponding points of the conductive body.

According to other examples of the disclosure, the wearable device may comprise two or more charms, different charms comprising different passive RFID ICs readable by different identifying systems.

This way, using the same wearable device, users can identify themselves with different non-related identifying systems, such as, for example, different payment services, an identification system to enter a building, or a car park identification system.

Also, in another example, the passive RFID IC may be a Near Field Communications Integrated Circuit (NFC IC from now on), which is the most commonly used RFID identification chip, and at least one of the identifying systems which identifies one of the RFID ICs may be, for example, a contactless payment system. Other identifying systems may also be, for example, systems allowing the user to enter premises such as buildings, car parkings, etc., or systems to pay for tickets for a bus or a train, or other specific transportation networks.

This way, in an example, the wearable device may have one or more charms which are readable by a contactless payment reader, and a charms' RFID IC may be linked to a credit card, a specific bank account or a similar payment system, while another charm may be linked to a ticketing system for transportation, or as an entry ID for an office, building or car park. Therefore, the wearable device may be customised for the needs of a user, enabling payments with different bank accounts or payment systems, and other type of services, using the same wearable device, while adding different charms to the body, thus making it very versatile.

According to several examples of the disclosure, the wearable device may be embodied in the form of, for example, a standalone wearable jewellery ornament or accessory, such as a bracelet, necklace, finger ring, or another similar ornament. It may also be possible to embed the wearable device in other types of wearable accessories such as sunglasses (wherein the elongated body may be, for example, the temples of the glasses, with the charm being movable along them), wrist watches or the like, and the wearable device may even be embedded in clothing as part of an ornament or functional part of the piece of clothing (such as, for example, a badge, a button, brooch, etc...). Furthermore, the wearable device may also be embodied in any other type of portable accessory, such as, for example, a keychain or a cell phone case having a plurality of decorative charms and an elongated conductive body attached to it.

According to another aspect of the disclosure, a charm for a wearable or portable device for electronic identification is presented, the charm comprising a passive RFID IC embedded within it configured to be identified by an identifying system, the charm further comprising an opening, the charm being configured to be mounted movable around the conductive body of the wearable device by means of the opening, wherein the charm is configured to cooperate with the dielectric portion of the body such that, in an assembled position of the charm on the dielectric portion, the passive RFID IC electrically connects the two points of the conductive body of the device, such that at least part of the conductive body of the device forms an antenna for the RFID IC.

### BRIEF DESCRIPTION OF THE DRAWINGS

Non-limiting examples of the present disclosure will be described in the following, with reference to the appended drawings, in which:
Figure 1 depicts the wearable device of the present disclosure in the form of a bracelet with a plurality of charms.
Figure 2 depicts the example of figure 1, wherein one charm is in an assembled position with the dielectric portion.
Figure 3 depicts a different example of the wearable device of the present disclosure, in the form of a bracelet with a plurality of charms.
Figure 4 depicts another example of the wearable device of the present disclosure, embodied in sunglasses.
Figure 5 depicts a further example of the wearable device of the present disclosure, embodied in a keychain.
Figure 6A and 6B depict a different example of the wearable device of the present disclosure, embodied in a bracelet with one detachable charm.
Figure 7A and 7B depict a section of two alternatives of a charm and the dielectric portion of the wearable device according to one example of the present disclosure.

### DETAILED DESCRIPTION OF EXAMPLES

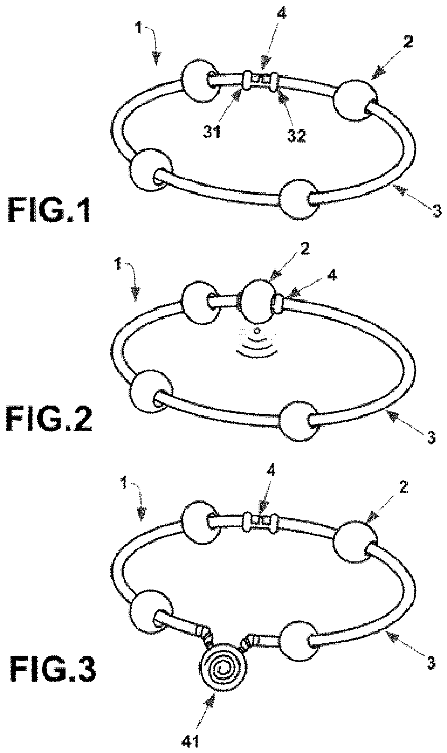

Figure 1 shows the wearable device of the present disclosure in the form of a bracelet 1 with a plurality of charms 2 which have an RFID IC chip embedded within (not shown). In this example, the bracelet 1 may have a conductive body 3 which forms a loop, interrupted by a non-conductive spacing between two points 31, 32, which may have a dielectric portion 4. The charms 2 may be mounted movable along the conductive body 3, and the RFID ICs within each charm may be placed in such a way that they allow to connect and disconnect the charms 2 from the conductive body 3 in order to activate and deactivate the RFID ICs found in each charm (one IC active at a time). The connection may be performed by placing a charm 2 in an assembled position with the dielectric portion 4, in which the RFID IC provides a connection between points 31, 32 bypassing the dielectric portion 4. In this example, the RFID IC found in each charm is an NFC IC, and it identifies the user in a contactless payment system. Specifically, each charm corresponds to a different contactless payment system (each linked to a different bank account), thus enabling the user to pay for a product or service using a specific credit or debit card linked to the contactless payment system of the corresponding charm.

Figure 2 shows the bracelet of figure 1, wherein one of the charms 2 is in an assembled position with the dielectric portion 4, thus connecting the NFC IC of the charm to the conductive body 3, which acts as an antenna, and activating the NFC IC. In this example, a reader nearby the charm would identify (or read) the information within the charm (found in the corresponding NFC IC), thus enabling to perform a contactless payment.

Figure 3 shows a different example of an embodiment of the present disclosure, wherein the the conductive body may further comprise a middle portion, which has an RFID antenna 41 electrically connected to the conductive body 3. This antenna may be electrically connected to the conductive body in series, thus enhancing the performance of the NFC IC (for example, its range by increasing a specific distance or modifying adequately the range lobe of the antenna resulting of the in series combination of the conductive body 3 and the RFID antenna 41, when the charm 2 is in an assembled position with the dielectric portion 4).

Furthermore, in any of the examples, in the case where the wearable device comprises more than one charm, only one charm may be placed in the assembled position at a time, thus activating one charm at a given time. When assembling a charm on the dielectric portion, the rest of the charms may remain mounted movable around the conductive body through their openings, and there may be an accidental contact of the RFID IC connectors of those charms with the conductive body. However, due to the dimensions of the charm, in case of an accidental contact of the pair of connectors with the conductive body, the inductance of the body between the two connectors is not enough to accidentally activate the RFID IC when its charm is in an non-assembled position.

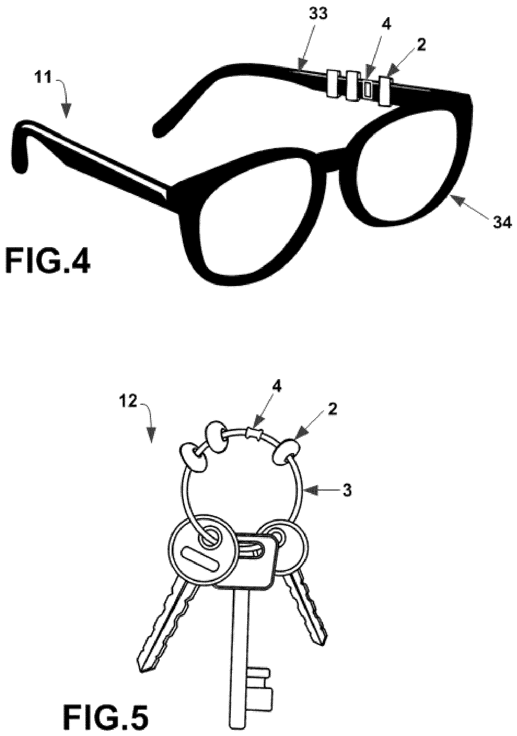

Figure 4 shows a different example of an embodiment of the present disclosure, wherein the wearable device is in the form of a pair of sunglasses 11, and the conductive body 33, 34 is embedded in or the frame of the glasses itself, the dielectric portion 4 is found in one of the temples 33 of the glasses 11, and the charms 2 are mounted and movable along the temple 33. More specifically, in this example, the elongated body may be embodied by the temple 33 and the eye-frame 34, forming a loop which is closed when a charm 2 is assembled on the dielectric portion 4.

In this case, an elongated conductive body is embodied along the temple 33 and the eye-frame 34, beginning and ending at the point of the temple where the dielectric portion 4 is found. Thus, when one of the charms 2 is in an assembled position on the dielectric portion 4, an antenna is formed which is embodied along the temple 33, around the eye-frame 34, and back along the same temple 33 towards the dielectric portion 4.

Alternatively, other loops may be formed comprising other combinations of parts of the sunglasses 11 such as, for example, a combination as the one described above, adding the second temple and/or the second eye-frame to the loop, said loop being closed when a charm 2 is assembled on the dielectric portion 4, thus the closed loop forming an antenna for the RFID IC found within the charm 2.

This way, the user may be wearing the glasses and may be able to perform a contactless payment by assembling one of the charms 2 to the dielectric portion 4 on the temple 33 of the glasses 11, without taking them off. The charms 2 may be in the form of, for example, an ornament of the temple 33 of the glasses 11, which may have, for example, a shape of the brand of the sunglasses 11, already existing in the original design of the sunglasses 11.

Figure 5 shows a different example of an embodiment of the present disclosure, wherein the wearable device is in the form of a keychain 12 comprising a conductive body 3, a plurality of charms 2 and a dielectric portion 4, which may be similar as in the case of a bracelet of previous figures, but with smaller dimensions and attached to a ring of a keychain as seen in the figure. In this example, since there is no need for the body of the keychain to be worn like a bracelet, the conductive body 3 may be a ring or may vary in shape.

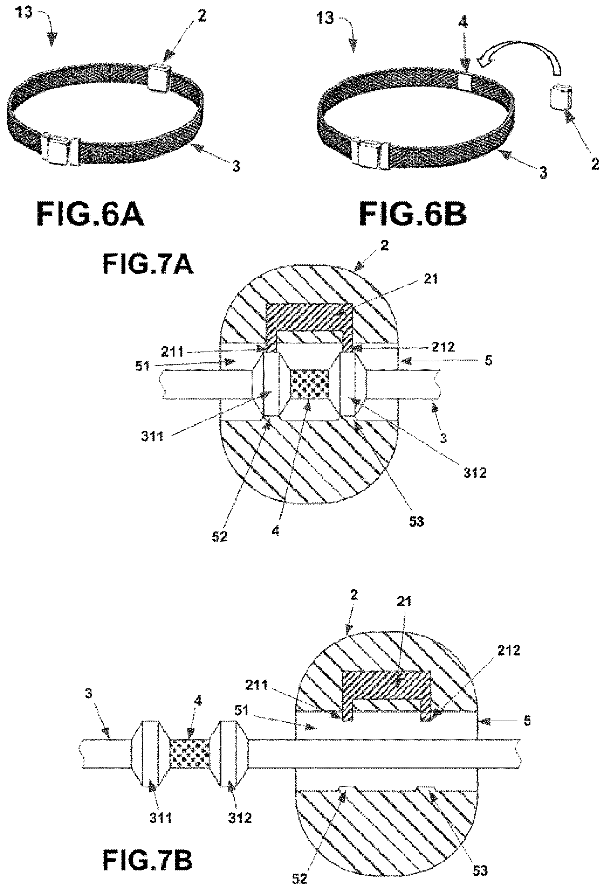

Figure 6A and 6B show a further example of an embodiment of the present disclosure in the form of a bracelet 13 with a detachable charm 2 having a u-shaped section opening, for mounting or inserting the charm on the conductive body 3 of the bracelet. After the charm is mounted on the body, it may be movable along the body. Thus, the charm 2 may be easily interchangeable, and may be attached to the conductive body 3 and, when assembled to the dielectric 4, it may be activated to enable, for example, a contactless payment by means of the RFID IC found within the charm 2. Other types of identications may be performed by other type of charms 2, such as identifications with systems allowing the user to enter premises such as buildings, car parkings, etc., or systems to pay for tickets for a bus or a train ride, or other specific transportation networks.

Figure 7A shows one example of a charm 2 in the assembled position on the dielectric portion 4. More specifically it shows a section drawing of a charm 2 mounted on a conductive body 3 of a bracelet, through an opening 5 of the charm 2, the opening 5 surronding the conductive body 3, and the opening 5 defining an inner wall 51. The charm 2 also comprises an RFID IC 21 embodied in itself, the RFID IC 21 comprising two ports 211, 212, which protrude from the inner wall 51 into the opening 5 of the charm 2. The conductive body 3 also comprises two connectors 311 and 312, e.g. formed as rings projecting from the surface of the conductive body 3, each electrically connected to a respective end of the conductive body 3, and a dielectric portion 4 placed in between the connectors 311, 312, the dielectric portion 4 electrically insulating the connectors 311, 312 from each other.

In this figure, the charm 2 is supported fix in relation to the conductive body 3, in such a way that the two connectors 311, 312 of the conductive body are electrically connected to the RFID IC ports 211, 212, and at the same time, the connectors 311, 312 are supported by the protusions 52, 53.

Therefore, in the assembled position, the ports 211, 212 are connected in series to the conductive body 3, bypassing the dielectric portion 4, the conductive body forming an antenna for the RFID IC 21, thus activating the RFID IC 21 and making it readable by an RFID IC reader.

To prevent from accidentally moving the charm to the assembled position (thus accidentally activating the RFID IC), and for better retention of the charm in the assembled position, the inner wall 51 of the opening 5 of the charm 2 may comprise two protusions 52, 53 opposite the ports 211, 212. The connection of the connectors 311, 312 to the ports 211, 212, and the engagement of the connectors 311, 312 against the protusions 52, 53 result in the charm 2 being fixed in relation to the conductive body 3, once the charm is in the assembled position.

Figure 7B shows another section drawing of a different position of the charm 2 and the conductive body 3 of the bracelet of figure 7A, wherein the charm 2 is in an unassembled position with relation to the dielectric portion 4 of the conductive body 3. Thus, in this figure, the charm 2 is mounted around the conductive body, but movable along the conductive body, and the ports 211, 212 of the RFID IC 21 are not electrically connected to the connectors 311, 312. Therefore, an antenna is not formed by the connection of the conductive body 3 in series with the RFID IC 21 of the charm 2, and the RFID IC 21 is not active, and an RFID IC reader is not able to read the identification found in the RFID IC 21.

When the user wants to, for example, make a payment, he/she may simply slide the charm 2 towards the assembled position of figure 7A by exerting a small pressure on the charm itself, thus securing that the charm 2 doesn't move once it is in the assembled position.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A Wearable or portable device for electronic identification (1) comprising one or more charms (2), the charm further comprising a passive RFID IC (21) embedded in it and configured to be identified by an identifying system, wherein the charm (2) comprises an opening (5), the device further comprising:
- An elongated conductive body (3) comprising two points (31, 32) with a non-conductive spacing between them;
- A dielectric portion (4) arranged in the spacing between the two points (31, 32) of the elongated conductive body;
wherein the opening of the charm is configured to be mounted movable around the body, and wherein the dielectric portion (4) is configured to cooperate with the charm (2) such that, in an assembled position of the charm on the dielectric portion, the passive RFID IC (21) electrically connects the two points (31, 32) of the conductive body, such that at least part of the conductive body forms an antenna for the RFID IC.

2. The device (1) according to claim 1, comprising two or more charms (2), the charms further comprising different passive RFID ICs (21) readable by different identifying systems.

3. The device (1) according to any of claims 1 or 2, wherein the passive RFID IC (21) is an NFC IC.

4. The device (1) according to any of claims 1 to 3, wherein the dielectric portion (4) is made of a plastic material.

5. The device (1) according to any of claims 1 to 4, wherein the identifying system is a contactless payment system.

6. The device (1) according to any of claims 1 to 5, wherein the conductive body (3) further comprises a middle portion, the middle portion comprising an RFID antenna (41) electrically connected to the conductive body (3).

7. The device (1) according to any of claims 1 to 6, wherein the opening (5) of the charm (2) is configured as a tubular structure to surround the conductive body (3).

8. The device (1) according to any of claims 1 to 7, wherein the device (1) is in the form of a wearable jewellery ornament.

9. The device (1) according to claims 8, wherein the device (1) is a wearable jewellery ornament is one selected from the group consisting of a bracelet, a necklace or a ring.

10. The device (1) according to any of claims 1 to 7, wherein the device (1) is embodied in the form of sunglasses (12).

11. The device (1) according to any of claims 1 to 7, wherein the device is embodied in the form of a keychain (13).

12. A charm (2) for a wearable or portable device (1) for electronic identification as defined in claim 1, comprising a passive RFID IC (21) embedded within it configured to be identified by an identifying system, the charm (2) further comprising an opening (5), the charm (2) being configured to be mounted movable around the body (3) of the wearable device (1) by means of the opening (5), wherein the charm (2) is configured to cooperate with the dielectric portion (4) of the body (3) such that, in an assembled position of the charm (2) on the dielectric portion (4), the passive RFID IC (21) electrically connects the two points (31, 32) of the conductive body (3) of the device (1), such that at least part of the conductive body (3) of the device (1) forms an antenna for the RFID IC (21).
